# EUROPEAN PATENT SPECIFICATION

(11) **EP 3 773 077 B1**
(45) Date of publication and mention of the grant of the patent: **08.01.2025**
(21) Application number: 19777463.1
(22) Date of filing: 13.03.2019
(51) Int. Cl.: A47B 96/20, B32B 1/00, B32B 3/18, B32B 3/22

(54) **A LAMINATED BUILDING MATERIAL AND A METHOD FOR PRODUCING A LAMINATED BUILDING MATERIAL**
LAMINIERTES BAUMATERIAL UND VERFAHREN ZUR HERSTELLUNG EINES LAMINIERTEN BAUMATERIALS
MATÉRIAU DE CONSTRUCTION STRATIFIÉ ET PROCÉDÉ DE PRODUCTION DE MATÉRIAU DE CONSTRUCTION STRATIFIÉ

(30) Priority: 27.03.2018 SE 1850336
(43) Date of publication of application: 17.02.2021
(73) Proprietor: Inter IKEA Systems B.V., 2616 LN Delft (NL)
(72) Inventor: ANDREASSON, Tomas, 423 53 Torslanda (SE)
(74) Representative: Ström & Gulliksson AB
(86) International application number: PCT/SE2019/050223
(87) International publication number: WO 2019/190373

(56) References cited:
- WO-A1-2010/049418
- WO-A1-2010/049418
- DE-A1- 102009 036 985
- DE-A1- 3 821 611
- FR-A1- 2 323 529
- GB-A- 1 543 645
- GB-A- 1 543 645
- GB-A- 1 563 942
- GB-A- 1 563 942
- GB-A- 467 071
- JP-A- H10 249 816

## Description

### FIELD OF THE INVENTION

The present invention relates to a laminated building material, preferably board, e.g. of a type used for furniture elements that have a body that is enclosed by such a board material and where the board material has a laminating foil on its outer face.

### BACKGROUND INFORMATION

In furniture manufacturing, low weight elements are widely used. Such elements usually comprises a board material that may enclose a lightweight filling material. The outside of the board is covered by a thin film for increasing the aesthetic impression as well as for providing a protective coating for the element. Such low weight elements can be used as construction elements, door panels, and a large amount of furniture elements. Especially in case of home interior applications, there are high demands on the thin film. Any damage or degeneration will deteriorate the quality of the low weight element. Consequently, a number of manufacturing methods for such low weight elements have been presented.

WO2010/044418 describes a method for providing a laminated board which can be folded to form a corner with a beveled or bead edge. The method comprises arranging a first longitudinal groove on a first side of the board material, such that at least one outer-pointing normal to the tangent plane of each groove surface of the first groove will intersect the plane of the first side of the board. A laminating foil is applied on the first side of the board material and covers the first groove. A second longitudinal groove is arranged on a second side of the board material, such that the second groove is extending through the board material to connect with the first groove, whereby a through slot is created in the board material. Furthermore, the second groove is arranged such that at least one outer-pointing normal to the tangent plane of each groove surface will intersect the plane of the second side of the board. It is stated that this design is advantageous in that it decreases the risk of damaging the laminating foil when the board material is folded to form a corner while using the laminating foil as a hinge, since the second groove does not need to extend all the way to the laminating foil but only to the first groove. Accordingly, there will be less strain on the laminating foil at the hinge than if the second groove extends all the way to the laminating foil, as is conventional in prior art. When the board material is folded to form a corner, the groove surfaces of the second groove will meet/abut against each other. A problem with this design is however that the corner may be inadequately structurally stable, especially if the corner has a large bevel or a bead with a big radius, since in that case the meeting groove surfaces of the second groove will be small. Accordingly, there is a risk that the meeting groove surfaces may slip against each other, or that they may be displaced against each other if the finished corner is subjected to stress or impact when in use. During manufacturing, small meeting groove surfaces may also result in a corner of bad definition, such as not having the proper angle or being slightly displaced.

FR2323529A1 describes a laminated board where a folded bead corner is formed in a manner similar to that described in WO2010/044418. Here, an attempt to structurally stabilize the corner has been made by providing one of the groove surfaces of the second groove with a outwards projecting, longitudinal rib of semicircular cross-section, and providing the meeting groove surface with a corresponding indentation. When the board material is folded to form a corner, the rib and the indentation will engage with each other thus aiming to prevent sliding or displacement of the boards that form the corner. This design has the drawback however, that the structural stability of the corner is inadequately improved since the roundness of the semicircular rib will make it quite easily slip out from the indentation in which it is intended to lie. Also, if the bead radius of the corner is large, the surface of the second groove will be too small to make the indentation and still have enough material in the nose (i.e. the portion where the first groove transitions into the second groove). Thereby, the nose will be susceptible to breakage if subjected to stress or impact.

From GB 1543645 and GB 1563942 there are known methods for laminating a building material, including board, for use in equipment cabinets, e.g. radio receiver cabinets, wherein the methods aim at producing rounded corners. The methods improved on prior art that used mitre milling for the purpose of obtaining three connected and hinge able individual parts, to form a rounded corner, by providing methods of making corner forming elements comprising providing a sheet of rigid plate or board, forming a first transverse groove in one surface of the plate or board, sticking a flexible surface foil onto the one surface of the plate or board such that it extends over the groove and is not stuck to the plate or board in the area of the groove, and then forming a second profiled groove in the opposite surface of the plate or board in order to separate the plate or board into separate wall members which can be folded to produce a rounded corner with the foil on the outside. However, these ancient methods may suffer from lack of precision, especially in respect of building materials using relatively thin board sheet.

Hence, an improved laminated building material, e.g. laminated board for a low weight element for furniture manufacturing would be advantageous. Especially, there is a need for a laminated building material that is adapted for folding into a beveled or bead corner of adequate structural stability, while keeping the laminating foil intact, without ruptures or creases.

### SUMMARY OF THE INVENTION

It is an object of the present invention to overcome or at least minimize at least one of the drawbacks and disadvantages of the above described laminated boards. This can be obtained by a laminated building material according to claim 1 for use in furniture elements, comprising a building material having a first side and a second side, a first groove, provided on the first side of the board material, a second groove, provided adjacent said second side of the board material, by which first and second grooves the building material is divided into a first building material part and a second building material part, and a laminating foil, applied on said first side of the building material and covering said first groove, wherein a first groove half of said second groove, at said first building material part, is profiled to have first and second surfaces extending in at least two planes: a first plane that forms an angle to said second side of said building material and a second plane, respectively, that forms an angle to said first plane, and a second groove half of said second groove, at said second building material part, has a surface extending in fourth plane to engage with said first surface in the second plane when said first and said second building material parts are folded towards each other with said laminating foil acting as a hinge, whereby the surface in said first plane engages with a supporting surface portion of the second side of said second building material part adjacent said second groove half, wherein said profile of said first groove half of said second groove, at said first building material part, forms a receiving recess for a locking shoulder formed on said second building material part, which locking shoulder is formed at least partly between said supporting surface portion and the surface extending in said fourth plane of said second groove half, arranged to form a bead or beveled furniture corner when said first and said second building material parts are folded towards each other with said laminating foil acting as a hinge, where a shape of the bead or bevel is defined by a cross-sectional shape of said first groove, wherein said supporting surface portion of the second side is processed, preferably by means of machining, the supporting surface portion being arranged to be precisely shaped to fit with said first surface.

According to one aspect of the invention, the laminated board is adapted to form a bead or beveled furniture corner when the first and the second board material parts are folded towards each other with the laminating foil acting as a hinge, where a shape of the bead or bevel is defined by a cross-sectional shape of the first groove, and the shape of the bead or bevel is defined by a radius R in the range 1<R<5 mm.

According to another aspect of the invention, the thickness of said building material is in the range of about 1-3 mm.

According to another aspect of the invention, the laminating foil has a thickness of 1 mm or less, such as in the interval of 0.1 to 1 mm.

According to another aspect of the invention, supporting surface portion forms an edge at the transition to the neighbouring surface of the second side.

According to another aspect of the invention, two neighbouring bead or beveled furniture corners of the furniture element are positioned symmetrically, one forming a mirror image of the other, in relation to a central plane of said furniture element.

According to another aspect of the invention, the bead or beveled furniture corner includes nose portions, formed by protruding opposing noses of said first and said second building material parts in an unfolded planar state and said first groove half is arranged with a further surface extending in a third plane connecting to said first groove, at an angle to a normal to a plane of the first, outer side of the building material and transitioning into the surface in said second plane forming an obtuse angle to said second plane, and in that said second half of said second groove, at said second building material part, is profiled to extend in at least two planes, including a fifth plane connecting to said first groove at said angle to the normal to the plane of said first side of said second building material part.

According to still another aspect of the invention, the first surface has a dimension t that is 60 - 90 % of a thickness of the building material.

According to still another aspect of the invention, the sum of the angle to the normal to the plane of the first side and the obtuse angle is 180°, where the angle to the normal to the plane preferably is 30 - 60°, and even more preferred about 45°.

According to the invention, the transversal width of said first surface is larger than the total transversal width of said second groove half.

Thanks to the present invention, a laminated board material is provided which is adapted for folding into a beveled or bead corner of adequate structural stability, while keeping the laminating foil intact, without ruptures or creases. Specifically, the corner will be stabilized in terms of prevention of sliding of the board materials that meet in the corner. This is achieved by the provision of inter locking details as defined in claim 1. Beneficially, these locking details are more easily manufactured, and will be of better definition, and will give a better structural stability, as compared to prior art.

According to still another aspect of the invention it relates to a method as defined in claim 10, which defines a method for laminating a building material, preferably board, for use in furniture elements, in accordance with the invention.

Thanks to this procedure the grooves may easily be positioned exactly as intended in combination with application of the laminating foil. Further, the machining assures good fit of the surfaces that will interfit/be in contact.

Further beneficial aspects of the method are defined in the dependent method claims 11-13.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
- Fig. 1: is a side view of a furniture element comprising a laminated board according to prior art,
- Fig. 2: is a side view of a laminated board according to one embodiment of the invention,
- Figs. 3-5: show folding steps of the laminated board in Fig. 2, to form a bead corner for a furniture element,
- Fig. 6: is a detailed side view of the board shown in Figs. 2-5, and,
- Figs. 7 to 14: show possible modifications of the design according to the invention,
- Fig. 15: shows a preferred embodiment for arranging the corners when using the concept according to the invention for a furniture element, in unfolded state, and,
- Fig. 16: shows the preferred embodiment of Fig. 15 in folded state.

### DETAILED DESCRIPTION OF THE PREFERRED EMBODIMENTS

The following detailed description, and the examples contained therein, are provided for the purpose of describing and illustrating certain embodiments of the invention only and are not intended to limit the scope of the invention in any way.

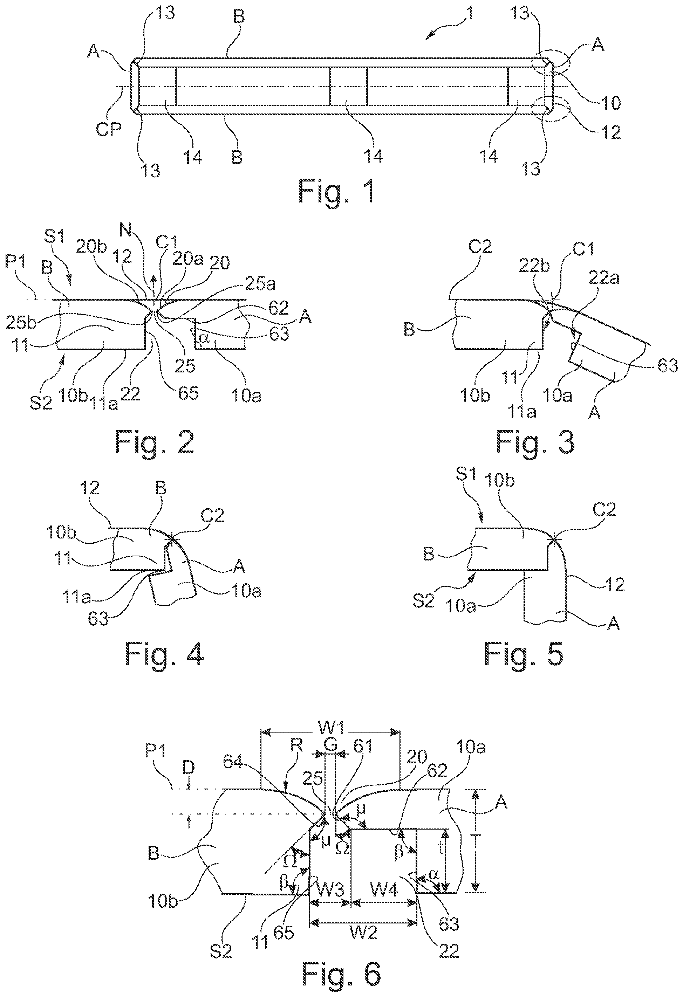

In Fig. 1, a schematic cross section of a planar furniture element 1 having a central plane CP for its longitudinal extension, according to prior art is shown (not to scale). The furniture element 1 comprises a supporting structure 14 being surrounded by board material 10 , in the form of two relatively thin edge side parts A and two relatively wide front/back side parts B and a laminating foil 12. The board material 10 and the laminating foil 12 are covering four sides of the furniture element 1, i.e. the upper side, the lower side, and two edges. The supporting structure 14 comprises longitudinal bodies between which a hollow body is formed, optionally filled with a spacer material. At each corner, folding lines 13 indicate how the laminated board 10 and the laminating foil 12 have been folded.

Fig. 2 is a side view of an embodiment of an unfolded laminated board according to the invention, comprising two separate parts 10a, 10b of a board material 10 and a laminating foil 12, wherein the laminating foil 12 is in contact with an upper surface plane P1 and the two separate parts 10a, 10b extend in parallel to the upper surface plane P1. The laminating foil 12 is arranged on an outside S1 of the board material 10, covering a first longitudinal groove 20 provided adjacent the first side S1 of the board material 10. Each groove surface 20a, 20b of the first groove 20 faces the laminating foil 12 that also across the groove 20 extends in the upper surface plane P1 on the outer side S1 of the board. This embodiment may provide specific advantages in combination with achieving a shape of a bead or bevel having a radius R in the range 1<R<5 mm, and/or the thickness T of the building material 10 is in the range of about 1-3 mm, and/or laminating foil 12 has a thickness of 1 mm or less, such as a thickness in the interval 0.1 to 1 mm.

A second longitudinal groove 22 is provided on the inner, opposite side S2 of the board material 10 and is, preferably, connected to the first groove 20, preferably such that a through slot 25 of a certain width G is formed, between two longitudinal edges forming peaks of two opposing noses 25a, 25b. Thus, the board material 10 includes a first and second part 10a, 10b held together by the laminating foil 12. The first groove 20 provided adjacent the outside S1 of the board material 10 is a longitudinal countersink having a fillet cross section, i.e. the groove 20 has curved surfaces 20a, 20b. Preferably, the depth D (see Fig. 6) of the first groove 20 may be between 10 and 70 percent of the thickness T of the board material 10. The second groove 22 is delimited by a first groove half 22a comprising non-curved groove surfaces 62, 63 and a second groove half 22b also comprising non-curved groove surfaces 64, 65, of a profiled cross section as will be described in more detail in relation to Fig. 6. A supporting corner/shoulder 11 having a supporting surface portion 11a extending along the inside S2 of the second board half is formed neighbouring the second groove 22. A first centre point C1 is located in the plane of the laminating foil 12 such that a normal N to the planar laminating foil 12, at the centre point C1, will project through the centre of the through slot 25, and also form a dividing plane for the groove halves 22a, 22 b.

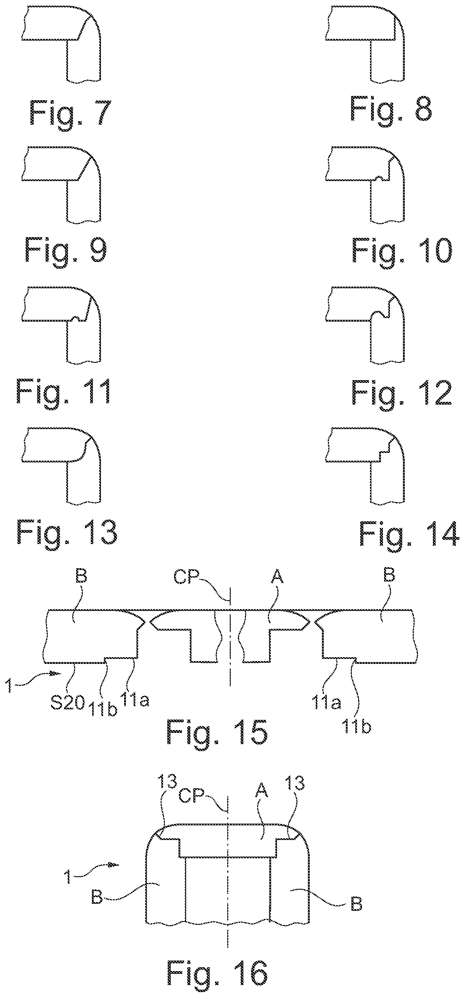

According to a preferred manner of producing the arrangement as shown in fig 2, a homogenous board 10 is used as a starting material and the first groove 20 produced in a first step, e.g. by means of grinding and/or milling. In a second step the laminating foil 12 is applied. In a third step the second groove 22 is produced, e.g. by means of grinding and/or milling. Preferably the supporting surface portion 11a is also machined, e.g. by means of grinding and/or milling, to assure that the supporting surface portion 11a is sufficiently precise to achieve good fit. (See also Figs. 15 and 16). Thanks to this procedure the grooves 20, 22 may easily be positioned exactly as intended in combination with application of the laminating foil 12. Further, the machining assures good fit of the surfaces that will interfit/be in contact.

Figs. 3-5 are showing the folding of the laminated board of Fig. 2, to form a corner of a desired angle (here 90°) for a furniture element. The two board material parts 10a, 10b are folded to start with by folding about the first centre point C1 (see Fig 2) until the through slot 25 is closed (see Fig 3). Now, the edges of the noses 25a, 25b will get in contact and act as pivot points forming a new folding axis C2. By pivoting about the folding axis C2 a desired corner will be formed while using the laminating foil 12 as a hinge. Hence, the laminating foil 12 will no longer be planar, but will be bent away from the first centre point C1 such that the centre point C1 will be located outside of the outer corner surface of the board material 10. In the folding step, the noses of the board material parts 10a, 10b, that define the through slot 25, will meet as the width of the through slot 25 approaches zero. As it does, i.e. as the corner starts to assume its desired angle, the groove surfaces of the second groove 22 will approach each other. At a certain degree of folding the first groove 20 will vanish (see Fig. 4), i.e. the foil 12 be in contact all of the surface of the outer corner surface.

When folded 90° (see Fig. 5) the surfaces of the two groove halves 22a, 22b (see Fig. 3) will meet and support each other by the profiled surfaces of the second groove 22. Thereby a supporting surface portion 11a of the second side S2 of the second board material part 10b will form a seat for one of the surfaces 63 of the first groove half 22a. In other words, an edge part with the supporting surface portion 11a included in the inside S2 of the second board material part 10b forms a corner/shoulder 11 providing a supporting surface portion 11a at the second side S2 of the second board material part 10b that supports one surface 63 of the first groove half 22a to be fixed in a direction parallel to the normal N. Another surface 65 of the second groove half 22b gets in contact with one surface 62 of the first groove half 22a to fix the corner in a direction perpendicular to the normal N. Hence, the first groove half 22a will also act as a receiving recess 22a for the corner/shoulder 11.

Fig. 6 shows the first and second board material parts 10a, 10b and the slot width of the connection between the grooves 20, 22 is designated G and is at its maximum width when the board material is planar, i.e. when the parts 10a, 10b are not folded. The width W1 of the fillet cross-section of the first groove 20 is defined by the radius R and the slot width G, i.e. the larger R and/or G are, the larger the width W1 will be. The first half 22a (see Fig 3) of the second groove 22 at the first board material part 10a, is profiled to extend in at least two 62, 63, preferably at least three 61, 62, 63, planes. A third plane 61 connects to the first groove 20 at an angle Ω to a normal N to the first side of the board material, thus forming a nose. At its other end, the first plane 61 transitions into a second plane 62, which second plane 62 forms an obtuse angle µ to the third plane 61 and preferably is parallel to the second side S2 of the first board material part 10a. A first plane 63 forms an angle α to the second side S2 of the first board material part 10a and transitions into the same. In the shown embodiment all surfaces are plane and therefore wholly coincide with said planes 61, 62, 63. In the following therefore the same reference number will be used for planes as for the surfaces and further merely one of symmetric angles Ω, µ will be described.

The second groove half 22b of the second groove 22 at the second board material part 10b, is profiled to form a locking shoulder 1 1(see Fig 3) that engages with the receiving recess formed by two of the surface 62, 63 at the first board material part 10a, when the first 10a and the second 10b board material parts are folded towards each other to form a corner, with the laminating foil 12 acting as a hinge.

The locking shoulder 11 is formed by a corner limited by a supporting surface portion 1 1a of the second surface S2 of the second board material part 10b and a fourth surface 65 (here called fourth surface to distinguish from the surfaces of the first groove half 22a) of the second groove half 22b.

Preferably, the second groove half 22b is also profiled having at least two surfaces 64, 65 extending in at least two planes (here seen as fourth and fifth plane to distinguish from the planes of the surface of the second groove half 22a). The fifth surface 64 connects to the first groove 20 at an angle Ω to the normal N to the plane P1 of the first side S1 of the board material 10, thus forming a nose. At its other end, the fifth plane 64 transitions into the fourth plane 65, which fourth plane 65 forms an obtuse angle µ to the fifth plane 64 and preferably is parallel to the normal N to the first side S1 of the second board material part 10b. When the board material 10 is folded to form a corner, the third 61 and the fifth 64 surfaces, which are of the same dimensions, will meet, the second 62 and the fourth 65 surfaces, which are of the same dimensions, will meet, and the first surface 63 will meet a supporting surface portion 11a of the second side S2 of the second board material part 10b.

In the non-folded configuration, the width or distance W2, i.e. the total width of the second groove 22, between the first 63 and the fourth planes 65 equals the sum of a width W4 of the surface in the second plane 62 and a width W3 between the left hand end point of the second surface 62 and the lower corner point of the fifth surface 64. The magnitude of the width W3 depends of the width of the through slot 25 and the angles Ω and µ. According to the invention, W4 is larger than W3. The first 63, as well as the fourth 65, surfaces are preferably of equal dimensions t. Suitably t is 30 - 90 %, more preferred 50 - 90 %, and even more preferred 60 - 90 % of the thickness T of the board material 10. The amount of the supporting surface portion 11a of the second side S2 of the second board material part 10b that is enclosed as the corner 11 is formed by the folding, corresponds to this dimension, i.e. the width t of the first surface 63.

The angle between the third plane 61 and the fifth plane 64 is selected in correspondence to the desired folding angle of the furniture element, i.e. preferably 90°. A sum of the angle Ω and the angle µ is suitably 180°, where the angle Ω preferably is 30 - 60°, and even more preferred about 45°. When the folding angle is selected to be 90 ° and in that case the angle Ω is suitably 45° and the angle µ is suitably 135°. Furthermore, in that case, the width W4 of the second plane 62 will equal the dimension t of the first 63 and the fourth 65 planes. The angle α is 90°. The width G of the through slot 25 is adapted so that the edges of the noses 25a, 25b (see Fig. 2) of the first and second board material parts 10a, 10b will precisely meet, as the parts are folded to a corner of a desired angle. A certain width G is preferred for the noses not to crush each other, as is known from prior art, but the invention may also fulfil its purpose if there is left a thin bridge (not shown), i.e. no gap G, between the noses 25a, 25b.

In Figs. 7 to 14 there are shown possible modifications of the design according to the invention, to exemplify that many design variations are possible within the scope of the appended claims, e.g. including a tongue groove arrangement, stepped surface etc., that may be arranged along the interfit zone of the furniture corner 13. As is clear from the various embodiments of Figs. 7 to 14 the surfaces of the groove halves may have other angles compared to what is shown in the embodiment of Figs. 2-6 with regard to the surfaces 61, 62, 63, 64, 65, as shown in for example Fig. 7 and Fig. 9. There may also be another number of surfaces, fewer or more surfaces, as shown in Figs. 8, 9 and 14. Furthermore, the surfaces can also have other shapes than straight, meaning the surfaces can be curved as illustrated in Fig. 13 and/or the surfaces can be made from several segments as illustrated in Fig. 14, and/or the surfaces may include notches as illustrated in Fig. 10, 11, and 12. Combinations of curved and/or straight surfaces and/or segmented surfaces and/or notches are also possible as illustrated in the figures, for example in Figs. 10, 11, 12, 13 and 14.

From a perspective of ease of production, depending on use of equipment/machinery, different designs may be preferred for different producers, as is evident for the skilled person. In this regard it is also evident for the skilled person that various production methods may be used. Traditional methods imply that designs of a kind that are well suited for milling is preferred. However, also non-traditional methods may of course be used, e.g. extrusion.

In Figs. 15 and 16 there are shown a preferred embodiment for arranging the corners 13 when applying the concept according to the invention for the folding of the corners 13. In Fig. 15 there is shown a side view of a part of furniture element 1 that is to be produced showing one edge side A and the two neighbouring front/back sides B respectively. Here the side portions A, B are in the unfolded state. As can be noted, in the preferred embodiment the use of the inventive concept is such that the corners are positioned symmetrically (one forming a mirror image of the other) in relation to the central plane CP of the furniture element 1. Accordingly, the support surfaces 11a will be positioned on the front and back sides B, respectively. As can be seen in Fig. 15 the supporting surfaces 11a have been formed by processing, such as machining (e.g. milling, grinding), the side portions, thereby forming a supporting edge 11b at the transition between the supporting surface 11a and the neighbouring surface S20 of the board material. The processing, such as machining, of the supporting surface portion 11a provides for improved accuracy in forming the corner and the supporting edge 11b provides for obtaining a strong corner. In Fig. 16 the folded state is presented. Thanks to having the corner arrangements mirror imaged in relation to the symmetry plane CP an advantage may be gained in relation to strength. It has been found that it may be more easy to provide superior strength in regard to forces where the direction of the force is in line with the normal of the supporting surface portions 11a, i.e. the strength is higher to forces acting in a direction being normal to the surface portions 11a. In the embodiment of Figs. 15 and 16 this means there is obtained a superior strength in a direction being normal to the symmetry plane CP. Mostly it is preferred to design the furniture elements 1 to be able to handle larger forces applied to the front and back sides B, respectively, compared to forces applied to the edge sides A. Accordingly an arrangement as shown in Figs. 15 and 16 will enable higher loads to be applied via the front and back sides B than forces applied via the edge sides A. Of course this design arrangement may also be used vice versa, if desired, by inverting the design to have the surface portions 11a on the edge side A instead of on the front and back sides B, i.e. if there is a need to provide for ability to withstand larger forces applied via the edge sides A compared to the front and back sides B.

Preferably, the board material 10 may be hardboard, high-density fiberboard, medium-density fiberboard, particleboard, cardboard, or any other type of fiberboard. The invention especially may provide drastic improvement for use in connection with relatively thin board sheet, i.e. having a thickness of about 1-3 mm, since the invention may provide both more easy exact fit when folding and improved structural stability. The laminating foil 12 may be selected from the group comprising paper foil, plastic foil, such as polypropylene foil or polyolefin foil, veneer, or any other type of foil suitable for laminating. If veneer is selected, it suitably has a thickness in the interval 0.1 to 1 mm, such as 0.1 to 0.6 mm. Thus, the board product may be provided with an appearance of solid wood, without seams, while being substantially lighter. When the veneer is in the upper part of the interval identified above, the veneer is vulnerable at the folding edges. If the edges are sharp, the veneer may be provided with a reinforcing textile fiber mat on the side facing the board material and/or a polyolefin film on the side of the veneer not facing the board material. In a yet further embodiment, the longitudinal bodies or stiles 14 may be high-density fiberboard, medium-density fiberboard, particleboard, cardboard, solid wood or any sandwich construction known per se.

As will be understood by those skilled in the present field of art, numerous changes and modifications may be made to the above described and other embodiments of the present invention, without departing from the scope of the present invention as defined in the appending claims. For example, the person skilled in the art will readily conceive that various embodiments, e.g. other than those of Figs. 7 to 14, of the profile of the second groove surfaces are evident as a result of taking part of the basic concept of this invention. Moreover, it is foreseen that the main function of the invention may be achieved also without use of a through slot, gap G, but that e.g. by use of a resilient foil no gap is needed or e.g. by allowing a thin layer to remain between the first and second building material parts 10a, 10b. Further, the skilled person will have no problem in conceiving other relations between widths, angles and other dimension. Moreover, the invention is applicable to other building materials than board, e.g. wood, plaster, etc. Furthermore, the invention is equally applicable in case of a bevelled corner rather than a bead corner, i.e. of the type shown in Figs. 2a-3b in WO2010/044418. Moreover, the skilled person realizes that the expression processing may include various types of engineering, laser cutting, machining, pressing, etc. that may achieve the desired functionality.

To summarize, a laminated building material for use in furniture elements, comprises: a building material (10) having a first side (S1) and a second side (S2), a first groove (20), provided adjacent said first side (S1) of said building material (10), a second groove (22), provided adjacent said second side (S2) of said building material (10), and a laminating foil (12). A first groove half (22a) of said second groove (22), at said first building material part (10a), is profiled to have first and second surfaces (62, 63) extending in at least two planes: a first plane (P₆₃) that forms an angle (α) to said second side (S2) of said building material (10) and a second plane (P₆₂), respectively, that forms an angle (β) to said first plane (P₆₃), and a second groove half (22b) of said second groove (22), at said second building material part (10b), has a surface (65) extending in fourth plane (P₆₅) to engage with said first surface (62) in the second plane (P₆₂) when said first (10a) and said second (10b) building material parts are folded towards each other with said laminating foil (12) acting as a hinge, whereby the surface (63) in said first plane (P₆₃) engages with a supporting surface portion (11a) of the second side (S2) of said second building material part (10b) adjacent said second groove half (22b), wherein said profile of said first groove half (22a) of said second groove (22), at said first building material part (10a), forms a receiving recess for a locking shoulder (11) formed on said second building material part (10b), which locking shoulder (11) is formed at least partly between said supporting surface portion (11a) and the surface (65) extending in said fourth plane (P₆₅) of said second groove half (22b), arranged to form a bead or beveled furniture corner when said first (10a) and said second (10b) building material parts are folded towards each other with said laminating foil (12) acting as a hinge, where a shape of the bead or bevel is defined by a cross-sectional shape of said first groove (20), wherein said supporting surface portion (11a) of the second side (S2) is treated by means of machining, the supporting surface portion (11a) being arranged to be precisely shaped to fit with said first surface (63).

## Claims

1. A laminated building material, preferably board, for use in furniture elements, comprising: a building material (10) having a first side (S1) and a second side (S2), a first groove (20), provided adjacent said first side (S1) of said building material (10), a second groove (22), provided adjacent said second side (S2) of said building material (10), by which first and second grooves (20, 22) the building material (10) is divided into a first building material part (10a) and a second building material part (10b), and a laminating foil (12), applied on said first side (S1) of the building material (10) and covering said first groove (20), wherein a first groove half (22a) of said second groove (22), at said first building material part (10a), is profiled to have first and second surfaces (62, 63) extending in at least two planes: a first plane (Pes) including said second surface (63) that forms an angle (α) to said second side (S2) of said building material (10) and a second plane (P₆₂) including said first surface (62) respectively, that forms an angle (β) to said first plane (P₆₃), and a second groove half (22b) of said second groove (22), at said second building material part (10b), has a surface (65) extending in a fourth plane (P₆₅) to engage with said first surface (62) in the second plane (P₆₂) when said first (10a) and said second (10b) building material parts are folded towards each other with said laminating foil (12) acting as a hinge, whereby the second surface (63) in said first plane (P₆₃) engages with a supporting surface portion (11a) of the second side (S2) of said second building material part (10b) adjacent said second groove half (22b), wherein said profile of said first groove half (22a) of said second groove (22), at said first building material part (10a), forms a receiving recess (22a) for a locking shoulder (11) formed on said second building material part (10b), which locking shoulder (11) is formed at least partly between said supporting surface portion (1 1a) and the surface (65) extending in said fourth plane (P₆₅) of said second groove half (22b), arranged to form a bead or beveled furniture corner when said first (10a) and said second (10b) building material parts are folded towards each other with said laminating foil (12) acting as a hinge, where a shape of the bead or bevel is defined by a cross-sectional shape of said first groove (20), **characterized in that** said supporting surface portion (11a) of the second side (S2) of said second building material part (10b) adjacent said second groove half (22b), has been processed, preferably by means of machining, to be precisely shaped to fit with said second surface (63), and **in that** the transversal width (W4) of said first surface (62) is larger than the remaining width (W3) of said second groove (22), in the non-folded configuration.

2. A laminated building material according to claim 1, **characterized in that** said shape of the bead or bevel is defined by a radius (R) in the range 1<R<5 mm, more preferred 2≤R≤4 mm.

3. A laminated building material according to claim 1 or 2, **characterized in that** the thickness (T) of said building material (10) is in the range of about 1-3 mm.

4. A laminated building material according to claim 1, 2 or 3, **characterized in that** said laminating foil (12) has a thickness of 1 mm or less, such as a thickness in the interval 0.1 to 1 mm, more preferred 0.1 to 0.6 mm.

5. A laminated building material according to any of claims 1-4, **characterized in that** said supporting surface portion (11a) forms an edge (11b) at the transition to a neighbouring surface (S20) of the second side (S2).

6. A laminated building material according to any of claims 1-5, **characterized in that** two neighbouring bead or beveled furniture corners of the furniture element (1) are positioned symmetrically, one forming a mirror image of the other, in relation to a central plane (CP) of said furniture element (1).

7. A laminated building material according to any of the preceding claims, **characterized in that** said bead or beveled furniture corner includes nose portions (25a, 25b), formed by protruding opposing noses (25a, 25b) of said first (10a) and said second (10b) building material parts in an unfolded planar state and that said first groove half (22a) is arranged with a further surface (61) extending in a third plane (P₆₁) connecting to said first groove (20), at an angle (Ω) to a normal (N) to a plane (P1) of the first side (S1) of the building material (10) and transitioning into the first surface (62) in said second plane (P₆₂) forming an obtuse angle (µ) to said second plane (P₆₂), and **in that** said second half (22b) of said second groove (22), at said second building material part (10b), is profiled to extend in at least two planes (P₆₅, P₆₄), including a surface (64) in a fifth plane (P₆₄) connecting to said first groove (20) at an angle (Ω) to a normal (N) to a plane (P1) of said first side (S1) of said second building material part (10b).

8. A laminated building material according to any of the preceding claims, **characterized in that** said second surface (63) has a dimension (t) that is 60 - 90 % of a thickness (T) of said building material (10).

9. A laminated building material according to claim 7, **characterized in that** a sum of said angle (Ω) to the normal (N) to the plane (P1) of the first side (S1) and said obtuse angle (µ) is 180°, where said angle (Ω) to the normal (N) to a plane (P1) of the first side (S1) preferably is 30 - 60°, and even more preferred about 45°.

10. A method for laminating a building material, preferably board, for use in furniture elements, comprising the steps of providing a building material (10) having a first side (S1) and a second side (S2), providing a first groove (20) adjacent said first side (S1) of said building material (10), applying a laminating foil (12) on said first side (S1) of the building material (10) and covering said first groove (20) and then provide a second groove (22) adjacent said second side (S2) of said building material (10), which first and the second grooves (20, 22) divide the building material (10) into a first building material part (10a) and a second building material part (10b), where after said first (10a) and said second (10b) building material parts are folded towards each other with said laminating foil (12) acting as a hinge to form a bead or beveled furniture corner, further comprising profiling a first groove half (22a) of said second groove (22), at said first building material part (10a), to have first and second surfaces (62, 63) extending in at least two planes, a first plane (Pes) including said second surface (63) that forms an angle (α) to said second side (S2) of said building material (10) and a second plane (P₆₂) including said first surface (62), respectively, that forms an angle (β) to said first plane (P₆₃), and a second groove half (22b) of said second groove (22), at said second building material part (10b), to have a surface (65) extending in fourth plane (P₆₅) to engage with said first surface (62) in the second plane (P₆₂) when said first (10a) and said second (10b) building material parts are folded towards each other with said laminating foil (12) acting as a hinge, whereby the second surface (63) in said first plane (P₆₃) engages with a supporting surface portion (11a) of the second side (S2) of said second building material part (10b) adjacent said second groove half (22b), and profiling said first groove half (22a) of said second groove (22), at said first building material part (10a), to form a receiving recess (22a) for a locking shoulder (11) including the supporting surface (11a) formed on said second building material part (10b), wherein said locking shoulder (11) is formed by a corner of said second building material part (10b) and limited at least partly between said supporting surface portion (11a) and the surface (65) extending in a fourth plane (P₆₅) of said second groove half (22b), **characterized by** processing, preferably by means of machining, said supporting surface portion (11a) of the second side (S2) of said second building material part (10b) to be precisely shaped to fit with said second surface (63) and by providing the transversal width (W4) of said first surface (62) to be larger than the remaining width (W3) of said second groove (22), in the non-folded configuration.

11. A method according to claim 10, further comprising shaping said furniture corner by machining of said first groove (20), wherein said machining includes shaping a radius (R) in the range 1<R<5 mm, more preferred 2≤R≤4 mm.

12. A method according to any of claims 10 or 11, further by processing, preferably by means of machining, said supporting surface portion (11a) of the second side (S2) of said second building material part (10b) to be precisely shaped and thereby also form an edge (11b) at the transition to a neighbouring surface (S20) of the second side (S2).

13. A method according to claim 12, further comprising forming nose portions (25a, 25b), by forming protruding opposing noses (25a, 25b) of said first (10a) and said second (10b) building material parts in an unfolded planar state, providing said first groove half (22a) with a further surface (61) extending in a third plane (P₆₁) connecting to said first groove (20), at an angle (Ω) to a normal (N) to a plane (P1) of the first side (S1) of the building material (10) and transitioning into the first surface (62) in said second plane (P₆₂) forming an obtuse angle (µ) to said second plane (P₆₂), and profiling said second half (22b) of said second groove (22), at said second building material part (10b), to extend in at least two planes (P₆₅, P₆₄), including a fifth plane (P₆₄) connecting to said first groove (20) at said angle (Ω) to a normal (N) to a plane (P1) of said first side (S1) of said second building material part (10b) in an unfolded state.

## Patentansprüche

1. Laminiertes Baumaterial, vorzugsweise Platte, zur Verwendung in Möbelelementen, umfassend: ein Baumaterial (10) mit einer ersten Seite (S1) und einer zweiten Seite (S2), eine erste Nut (20), die angrenzend an die erste Seite (S1) des Baumaterials (10) vorgesehen ist, eine zweite Nut (22), die angrenzend an die zweite Seite (S2) des Baumaterials (10) vorgesehen ist, wobei das Baumaterial (10) durch die erste und die zweite Nut (20, 22) in einen ersten Baumaterialteil (10a) und einen zweiten Baumaterialteil (10b) unterteilt ist, und eine Laminierfolie (12), die auf die erste Seite (S1) des Baumaterials (10) aufgebracht ist und die erste Nut (20) bedeckt, wobei eine erste Nuthälfte (22a) der zweiten Nut (22) an dem ersten Baumaterialteil (10a) so profiliert ist, dass sie eine erste und eine zweite Oberfläche (62, 63) aufweist, die sich in mindestens zwei Ebenen erstrecken: einer ersten Ebene (Pes), die die zweite Oberfläche (63) enthält, die einen Winkel (a) zu der zweiten Seite (S2) des Baumaterials (10) bildet, und einer zweiten Ebene (P62), die die erste Oberfläche (62) enthält, die einen Winkel (β) zu der ersten Ebene (Pes) bildet, und eine zweite Nuthälfte (22b) der zweiten Nut (22) an dem zweiten Baumaterialteil (10b) eine Oberfläche (65) aufweist, die sich in einer vierten Ebene (Pes) erstreckt, um mit der ersten Oberfläche (62) in der zweiten Ebene (P62) in Eingriff zu kommen, wenn der erste (10a) und der zweite (10b) Baumaterialteil mit der Laminierfolie (12), die als ein Scharnier wirkt, zueinander gefaltet werden, wodurch die zweite Oberfläche (63) in der ersten Ebene (Pes) mit einem Stützoberflächenabschnitt (11a) der zweiten Seite (S2) des zweiten Baumaterialteils (10b) angrenzend an die zweite Nuthälfte (22b) in Eingriff kommt, wobei das Profil der ersten Nuthälfte (22a) der zweiten Nut (22) an dem ersten Baumaterialteil (10a) eine Aufnahmevertiefung (22a) für eine Verriegelungsschulter (11) bildet, die an dem zweiten Baumaterialteil (10b) ausgebildet ist, wobei die Verriegelungsschulter (11) mindestens teilweise zwischen dem Stützoberflächenabschnitt (11a) und der Oberfläche (65) ausgebildet ist, die sich in der vierten Ebene (Pes) der zweiten Nuthälfte (22b) erstreckt, die angeordnet ist, um eine Wulst oder abgeschrägte Möbelecke zu bilden, wenn der erste (10a) und der zweite (10b) Baumaterialteil mit der Laminierfolie (12), die als ein Scharnier wirkt, zueinander gefaltet werden, wobei eine Form der Wulst oder Abschrägung durch eine Querschnittsform der ersten Nut (20) definiert ist, **dadurch gekennzeichnet, dass** der Stützoberflächenabschnitt (11a) der zweiten Seite (S2) des zweiten Baumaterialteils (10b) angrenzend an die zweite Nuthälfte (22b), vorzugsweise mittels maschineller Bearbeitung, so bearbeitet wurde, dass er genau geformt ist, um mit der zweiten Oberfläche (63) zusammenzupassen, und dass die Querbreite (W4) der ersten Oberfläche (62) größer als die verbleibende Breite (W3) der zweiten Nut (22) in der nicht gefalteten Konfiguration ist.

2. Laminiertes Baumaterial nach Anspruch 1, **dadurch gekennzeichnet, dass** die Form des Wulstes oder der Fase durch einen Radius (R) im Bereich von 1 < R < 5 mm, bevorzugter 2 < R < 4 mm, definiert ist.

3. Laminiertes Baumaterial nach Anspruch 1 oder 2, **dadurch gekennzeichnet, dass** die Dicke (T) des Baumaterials (10) im Bereich von etwa 1-3 mm liegt.

4. Laminiertes Baumaterial nach Anspruch 1, 2 oder 3, **dadurch gekennzeichnet, dass** die Laminierfolie (12) eine Dicke von 1 mm oder weniger, wie beispielsweise eine Dicke im Bereich von 0,1 bis 1 mm, bevorzugter 0,1 bis 0,6 mm, aufweist.

5. Laminiertes Baumaterial nach einem der Ansprüche 1-4, **dadurch gekennzeichnet, dass** der Stützflächenabschnitt (11a) eine Kante (11b) am Übergang zu einer benachbarten Fläche (S20) der zweiten Seite (S2) bildet.

6. Laminiertes Baumaterial nach einem der Ansprüche 1-5, **dadurch gekennzeichnet, dass** zwei benachbarte Wulst- oder abgeschrägte Möbelecken des Möbelelements (1) symmetrisch positioniert sind, wobei eine ein Spiegelbild der anderen bildet, in Bezug auf eine Mittelebene (CP) des Möbelelements (1).

7. Laminiertes Baumaterial nach einem der vorhergehenden Ansprüche, **dadurch gekennzeichnet, dass** der Wulst oder die abgeschrägte Möbelecke Nasenabschnitte (25a, 25b) umfasst, die durch vorstehende gegenüberliegende Nasen (25a, 25b) des ersten (10a) und des zweiten (10b) Baumaterialteils in einem aufgeklappten ebenen Zustand gebildet sind, und dass die erste Nuthälfte (22a) mit einer weiteren Fläche (61) angeordnet ist, die sich in einer dritten Ebene (Pei) erstreckt, die mit der ersten Nut (20) in einem Winkel (Q) zu einer Normalen (N) zu einer Ebene (PI) der ersten Seite (S1) des Baumaterials (10) verbunden ist und in die erste Fläche (62) in der zweiten Ebene (P62) übergeht, die einen stumpfen Winkel (p) zu der zweiten Ebene (P62) bildet, und dass die zweite Hälfte (22b) der zweiten Nut (22) an dem zweiten Baumaterialteil (10b) profiliert ist, um sich in mindestens zwei Ebenen (Pes, P64) zu erstrecken, einschließlich einer Fläche (64) in einer fünften Ebene (P64), die mit der ersten Nut (20) in einem Winkel (Q) zu einer Normalen (N) zu einer Ebene (PI) der ersten Seite (S1) des zweiten Baumaterialteils (10b) verbunden ist.

8. Laminiertes Baumaterial nach einem der vorhergehenden Ansprüche, **dadurch gekennzeichnet, dass** die zweite Fläche (63) eine Abmessung (t) aufweist, die 60-90 % einer Dicke (T) des Baumaterials (10) beträgt.

9. Laminiertes Baumaterial nach Anspruch 7, **dadurch gekennzeichnet, dass** eine Summe des Winkels (Q) zu der Normalen (N) zu der Ebene (PI) der ersten Seite (S1) und des stumpfen Winkels (p) 180° beträgt, wobei der Winkel (Q) zu der Normalen (N) zu einer Ebene (PI) der ersten Seite (S1) vorzugsweise 30-60° und noch bevorzugter etwa 45° beträgt.

10. Verfahren zum Laminieren eines Baumaterials, vorzugsweise Platte, zur Verwendung in Möbelelementen, umfassend die Schritte des Bereitstellens eines Baumaterials (10) mit einer ersten Seite (S1) und einer zweiten Seite (S2), des Bereitstellens einer ersten Nut (20) angrenzend an die erste Seite (S1) des Baumaterials (10), des Aufbringens einer Laminierfolie (12) auf die erste Seite (S1) des Baumaterials (10) und des Abdeckens der ersten Nut (20) und dann des Bereitstellens einer zweiten Nut (22) angrenzend an die zweite Seite (S2) des Baumaterials (10), wobei die erste und die zweite Nut (20, 22) das Baumaterial (10) in einen ersten Baumaterialteil (10a) und einen zweiten Baumaterialteil (10b) unterteilen, wobei, nachdem der erste (10a) und der zweite (10b) Baumaterialteil zueinander gefaltet sind, wobei die Laminierfolie (12) als ein Scharnier wirkt, um einen Wulst oder eine abgeschrägte Möbelecke zu bilden, ferner umfassend das Profilieren einer ersten Nuthälfte (22a) der zweiten Nut (22) an dem ersten Baumaterialteil (10a), um eine erste und eine zweite Oberfläche (62, 63) aufzuweisen, die sich in mindestens zwei Ebenen erstrecken, einer ersten Ebene (Pes), die die zweite Oberfläche (63) beinhaltet, die einen Winkel (a) zu der zweiten Seite (S2) des Baumaterials (10) bildet, und einer zweiten Ebene (P62), die die erste Oberfläche (62) beinhaltet, die einen Winkel (β) zu der ersten Ebene (Pes) bildet, und einer zweiten Nuthälfte (22b) der zweiten Nut (22) an dem zweiten Baumaterialteil (10b), um eine Oberfläche (65) aufzuweisen, die sich in der vierten Ebene (Pes) erstreckt, um mit der ersten Oberfläche (62) in der zweiten Ebene (P62) in Eingriff zu kommen, wenn der erste (10a) und der zweite (10b) Baumaterialteil zueinander gefaltet sind, wobei die Laminierfolie (12) als ein Scharnier wirkt, wodurch die zweite Oberfläche (63) in der ersten Ebene (Pes) mit einem Stützoberflächenabschnitt (11a) der zweiten Seite (S2) des zweiten Baumaterialteils (10b) angrenzend an die zweite Nuthälfte (22b) in Eingriff kommt, und Profilieren der ersten Nuthälfte (22a) der zweiten Nut (22) an dem ersten Baumaterialteil (10a), um eine Aufnahmevertiefung (22a) für eine Verriegelungsschulter (11) zu bilden, die die Stützoberfläche (11a) beinhaltet, die an dem zweiten Baumaterialteil (10b) gebildet ist, wobei die Verriegelungsschulter (11) durch eine Ecke des zweiten Baumaterialteils (10b) gebildet ist und mindestens teilweise zwischen dem Stützoberflächenabschnitt (11a) und der Oberfläche (65), die sich in einer vierten Ebene (Pes) der zweiten Nuthälfte (22b) erstreckt, begrenzt ist, **gekennzeichnet durch** das Verarbeiten, vorzugsweise mittels maschineller Bearbeitung, des Stützoberflächenabschnitts (11a) der zweiten Seite (S2) des zweiten Baumaterialteils (10b), um präzise geformt zu sein, um mit der zweiten Oberfläche (63) zusammenzupassen, und durch das Bereitstellen der Querbreite (W4) der ersten Oberfläche (62), um größer als die verbleibende Breite (W3) der zweiten Nut (22) in der nicht gefalteten Konfiguration zu sein.

11. Verfahren nach Anspruch 10, ferner umfassend das Formen der Möbelecke durch maschinelles Bearbeiten der ersten Nut (20), wobei das maschinelle Bearbeiten das Formen eines Radius (R) im Bereich von 1 < R < 5 mm, bevorzugter 2 < R < 4 mm, umfasst.

12. Verfahren nach einem der Ansprüche 10 oder 11, ferner durch Verarbeiten, vorzugsweise mittels maschineller Bearbeitung, des Stützflächenabschnitts (11a) der zweiten Seite (S2) des zweiten Baumaterialteils (10b), um präzise geformt zu werden und dadurch auch eine Kante (11b) am Übergang zu einer benachbarten Fläche (S20) der zweiten Seite (S2) zu bilden.

13. Verfahren nach Anspruch 12, ferner umfassend das Bilden von Nasenabschnitten (25a, 25b) durch Bilden vorstehender gegenüberliegender Nasen (25a, 25b) des ersten (10a) und des zweiten (10b) Baumaterialteils in einem aufgeklappten ebenen Zustand, Versehen der ersten Nuthälfte (22a) mit einer weiteren Fläche (61), die sich in einer dritten Ebene (Pei) erstreckt, die mit der ersten Nut (20) in einem Winkel (Q) zu einer Normalen (N) zu einer Ebene (PI) der ersten Seite (S1) des Baumaterials (10) verbunden ist und in die erste Fläche (62) in der zweiten Ebene (P62) übergeht, die einen stumpfen Winkel (p) zu der zweiten Ebene (P62) bildet, und Profilieren der zweiten Hälfte (22b) der zweiten Nut (22) an dem zweiten Baumaterialteil (10b), um sich in mindestens zwei Ebenen (Pes, P64) zu erstrecken, einschließlich einer fünften Ebene (P64), die mit der ersten Nut (20) in dem Winkel (Q) zu einer Normalen (N) zu einer Ebene (PI) der ersten Seite (S1) des zweiten Baumaterialteils (10b) in einem aufgeklappten Zustand verbunden ist.

## Revendications

1. Matériau de construction stratifié, de préférence un panneau, destiné à être utilisé dans des éléments de meuble, comprenant : un matériau de construction (10) comportant un premier côté (S1) et un second côté (S2), une première rainure (20), ménagée adjacente audit premier côté (S1) dudit matériau de construction (10), une seconde rainure (22), ménagée adjacente audit second côté (S2) dudit matériau de construction (10), par lesquelles première et seconde rainures (20, 22) le matériau de construction (10) est divisé en une première partie de matériau de construction (10a) et une seconde partie de matériau de construction (10b), et une feuille de stratification (12), appliquée sur ledit premier côté (S1) du matériau de construction (10) et couvrant ladite première rainure (20), dans lequel une première moitié de rainure (22a) de ladite seconde rainure (22), au niveau de ladite première partie de matériau de construction (10a), est profilée de façon à comporter des première et seconde surfaces (62, 63) s'étendant dans au moins deux plans : respectivement, un premier plan (P₆₃) comprenant ladite seconde surface (63) qui forme un angle (α) par rapport audit second côté (S2) dudit matériau de construction (10) et un deuxième plan (P₆₂) comprenant ladite première surface (62) qui forme un angle (β) par rapport audit premier plan (P₆₃), et une seconde moitié de rainure (22b) de ladite seconde rainure (22), au niveau de ladite seconde partie de matériau de construction (10b), comporte une surface (65) s'étendant dans un quatrième plan (P₆₅) pour coopérer avec ladite première surface (62) dans le deuxième plan (P₆₂) lorsque lesdites première (10a) et seconde (10b) parties de matériau de construction sont pliées l'une en direction de l'autre, ladite feuille de stratification (12) servant de charnière, ce par quoi la seconde surface (63) dans ledit premier plan (P₆₃) coopère avec une partie de surface de support (11a) du second côté (S2) de ladite seconde partie de matériau de construction (10b) adjacente à ladite seconde moitié de rainure (22b), dans lequel ledit profil de ladite première moitié de rainure (22a) de ladite seconde rainure (22), au niveau de ladite première partie de matériau de construction (10a), forme un évidement de réception (22a) destiné à un épaulement de verrouillage (11) formé sur ladite seconde partie de matériau de construction (10b), lequel épaulement de verrouillage (11) est formé au moins partiellement entre ladite partie de surface de support (11a) et la surface (65) s'étendant dans ledit quatrième plan (P₆₅) de ladite seconde moitié de rainure (22b), conçu pour former un angle de meuble arrondi ou en biseau lorsque lesdites première (10a) et seconde (10b) parties de matériau de construction sont pliées l'une en direction de l'autre, ladite feuille de stratification (12) servant de charnière, où une forme de l'arrondi ou du biseau est définie par une forme de section transversale de ladite première rainure (20), **caractérisé en ce que** ladite partie de surface de support (11a) du second côté (S2) de ladite seconde partie de matériau de construction (10b) adjacente à ladite seconde moitié de rainure (22b) a été traitée, de préférence au moyen d'un usinage, pour être formée avec précision de façon à s'ajuster avec ladite seconde surface (63), et **en ce que** la largeur transversale (W4) de ladite première surface (62) est plus grande que la largeur restante (W3) de ladite seconde rainure (22), dans la configuration non pliée.

2. Matériau de construction stratifié selon la revendication 1, **caractérisé en ce que** ladite forme de l'arrondi ou du biseau est définie par un rayon (R) s'inscrivant dans la plage de 1 < R < 5 mm, on préfère davantage de 2 ≤ R ≤ 4 mm.

3. Matériau de construction stratifié selon la revendication 1 ou la revendication 2, **caractérisé en ce que** l'épaisseur (T) dudit matériau de construction (10) s'inscrit dans la plage d'environ 1 à 3 mm.

4. Matériau de construction stratifié selon la revendication 1, la revendication 2 ou la revendications 3, **caractérisé en ce que** ladite feuille de stratification (12) a une épaisseur inférieure ou égale à 1 mm, telle qu'une épaisseur s'inscrivant dans l'intervalle de 0,1 à 1 mm, on préfère davantage de 0,1 à 0,6 mm.

5. Matériau de construction stratifié selon l'une quelconque des revendications 1 à 4, **caractérisé en ce que** ladite partie de surface de support (11a) forme un bord (11b) au niveau de la transition en une surface voisine (S20) du second côté (S2).

6. Matériau de construction stratifié selon l'une quelconque des revendications 1 à 5, **caractérisé en ce que** deux angles de meuble arrondis ou en biseau voisins de l'élément de meuble (1) sont positionnés symétriquement, l'un formant une image miroir de l'autre, par rapport à un plan central (CP) dudit élément de meuble (1).

7. Matériau de construction stratifié selon l'une quelconque des revendications précédentes, **caractérisé en ce que** ledit angle de meuble arrondi ou en biseau comprend des parties de nez (25a, 25b), formées par des nez opposés en saillie (25a, 25b) desdites première (10a) et seconde (10b) parties de matériau de construction dans un état plan non plié et **en ce que** ladite première moitié de rainure (22a) est conçue avec une surface supplémentaire (61) s'étendant dans un troisième plan (P₆₁) relié à ladite première rainure (20), à un angle (Ω) par rapport à une normale (N) à un plan (P1) du premier côté (S1) du matériau de construction (10) et assurant une transition en la première surface (62) dans ledit deuxième plan (P₆₂) formant un angle obtus (µ) par rapport audit deuxième plan (P₆₂), et **en ce que** ladite seconde moitié (22b) de ladite seconde rainure (22), au niveau de ladite seconde partie de matériau de construction (10b), est profilée pour s'étendre dans au moins deux plans (P₆₅, P₆₄), comprenant une surface (64) dans un cinquième plan (P₆₄) relié à ladite première rainure (20) à un angle (Ω) par rapport à une normale (N) à un plan (P1) dudit premier côté (S1) de ladite seconde partie de matériau de construction (10b).

8. Matériau de construction stratifié selon l'une quelconque des revendications précédentes, **caractérisé en ce que** ladite seconde surface (63) a une dimension (t) qui correspond à 60 à 90 % d'une épaisseur (T) dudit matériau de construction (10).

9. Matériau de construction stratifié selon la revendication 7, **caractérisé en ce qu'**une somme dudit angle (Ω) par rapport à la normale (N) au plan (P1) du premier côté (S1) et dudit angle obtus (µ) est de 180°, où ledit angle (Ω) par rapport à la normale (N) à un plan (P1) du premier côté (S1) est de préférence de 30 à 60°, et l'on préfère même davantage d'environ 45°.

10. Procédé de stratification d'un matériau de construction, de préférence un panneau, destiné à être utilisé dans des éléments de meuble, comprenant les étapes consistant à utiliser un matériau de construction (10) comportant un premier côté (S1) et un second côté (S2), à ménager une première rainure (20) adjacente audit premier côté (S1) dudit matériau de construction (10), à appliquer une feuille de stratification (12) sur ledit premier côté (S1) du matériau de construction (10) et à couvrir ladite première rainure (20), et à ménager ensuite une seconde rainure (22) adjacente audit second côté (S2) dudit matériau de construction (10), lesquelles première et seconde rainures (20, 22) divisent le matériau de construction (10) en une première partie de matériau de construction (10a) et une seconde partie de matériau de construction (10b), où, après le pliage l'une en direction de l'autre desdites première (10a) et seconde (10b) parties de matériau de construction, ladite feuille de stratification (12) servant de charnière, pour former un angle de meuble arrondi ou en biseau, comprenant en outre l'étape consistant à profiler une première moitié de rainure (22a) de ladite seconde rainure (22), au niveau de ladite première partie de matériau de construction (10a), pour qu'elle comporte des première et seconde surfaces (62, 63) s'étendant dans au moins deux plans, respectivement, un premier plan (P₆₃) comprenant ladite seconde surface (63) qui forme un angle (α) par rapport audit second côté (S2) dudit matériau de construction (10) et un deuxième plan (P₆₂) comprenant ladite première surface (62) qui forme un angle (β) par rapport audit premier plan (P₆₃), et une seconde moitié de rainure (22b) de ladite seconde rainure (22), au niveau de ladite seconde partie de matériau de construction (10b), pour qu'elle comporte une surface (65) s'étendant dans un quatrième plan (P₆₅) de façon à coopérer avec ladite première surface (62) dans le deuxième plan (P₆₂) lorsque lesdites première (10a) et seconde (10b) parties de matériau de construction sont pliées l'une en direction de l'autre, ladite feuille de stratification (12) servant de charnière, ce par quoi la seconde surface (63) dans ledit premier plan (P₆₃) coopère avec une partie de surface de support (11a) du second côté (S2) de ladite seconde partie de matériau de construction (10b) adjacente à ladite seconde moitié de rainure (22b), et à profiler ladite première moitié de rainure (22a) de ladite seconde rainure (22), au niveau de ladite première partie de matériau de construction (10a), pour former un évidement de réception (22a) destiné à un épaulement de verrouillage (11) comprenant la surface de support (11a) formée sur ladite seconde partie de matériau de construction (10b), dans lequel ledit épaulement de verrouillage (11) est formé par un angle de ladite seconde partie de matériau de construction (10b) et est limité au moins partiellement entre ladite partie de surface de support (11a) et la surface (65) s'étendant dans un quatrième plan (P₆₅) de ladite seconde moitié de rainure (22b), **caractérisé par** l'étape consistant à traiter, de préférence au moyen d'un usinage, ladite partie de surface de support (11a) du second côté (S2) de ladite seconde partie de matériau de construction (10b) pour qu'elle soit formée avec précision de façon à s'ajuster avec ladite seconde surface (63) et par l'étape consistant à rendre la largeur transversale (W4) de ladite première surface (62) plus grande que la largeur restante (W3) de ladite seconde rainure (22), dans la configuration non pliée.

11. Procédé selon la revendication 10, comprenant en outre l'étape consistant à former ledit angle de meuble par un usinage de ladite première rainure (20), dans lequel ledit usinage consiste à former un rayon (R) s'inscrivant dans la plage de 1 < R < 5 mm, on préfère davantage de 2 ≤ R ≤ 4 mm.

12. Procédé selon l'une ou l'autre des revendications 10 et 11, comprenant en outre l'étape consistant à traiter, de préférence au moyen d'un usinage, ladite partie de surface de support (11a) du second côté (S2) de ladite seconde partie de matériau de construction (10b) pour qu'elle soit formée avec précision et pour ainsi former également un bord (11b) au niveau de la transition en une surface voisine (S20) du second côté (S2).

13. Procédé selon la revendication 12, comprenant en outre l'étape consistant à former des parties de nez (25a, 25b), par une formation de nez opposés en saillie (25a, 25b) desdites première (10a) et seconde (10b) parties de matériau de construction dans un état plan non plié, à doter ladite première moitié de rainure (22a) d'une surface supplémentaire (61) s'étendant dans un troisième plan (P₆₁) relié à ladite première rainure (20), à un angle (Ω) par rapport à une normale (N) à un plan (P1) du premier côté (S1) du matériau de construction (10) et assurant une transition en la première surface (62) dans ledit deuxième plan (P₆₂) formant un angle obtus (µ) par rapport audit deuxième plan (P₆₂) et par un profilage de ladite seconde moitié (22b) de ladite seconde rainure (22), au niveau de ladite seconde partie de matériau de construction (10b), pour qu'elle s'étende dans au moins deux plans (P₆₅, P₆₄), comprenant un cinquième plan (P₆₄) relié à ladite première rainure (20) audit angle (Ω) par rapport à une normale (N) à un plan (P1) dudit premier côté (S1) de ladite seconde partie de matériau de construction (10b) dans un état non plié.
